# EUROPÄISCHE PATENTSCHRIFT

(11) **EP 2 771 265 B1**
(45) Veröffentlichungstag und Bekanntmachung des Hinweises auf die Patenterteilung: **20.01.2016**
(21) Anmeldenummer: 12773342.6
(22) Anmeldetag: 22.10.2012
(51) Int. Cl.: B65G 63/02

(54) **UMLADEEINRICHTUNG**
RELOADING DEVICE
DISPOSITIF DE TRANSBORDEMENT

(30) Priorität: 26.10.2011 CH 17252011
(43) Veröffentlichungstag der Anmeldung: 03.09.2014
(73) Patentinhaber: Burkhardt, Martin, 9000 St. Gallen (CH)
(72) Erfinder: BAUMGARTNER, Marc, CH-9443 Widnau (CH); WIDMER, Dominik, 7324 Vilters (CH); NIELSEN, Einar, CH-8038 Zürich (CH); BURKHARDT, Martin, 9000 St. Gallen (CH)
(74) Vertreter: Stadler, Franz
(86) Internationale Anmeldenummer: PCT/EP2012/070861
(87) Internationale Veröffentlichungsnummer: WO 2013/060641

(56) Entgegenhaltungen:
- WO-A1-2006/119955

## Beschreibung

Die Erfindung betrifft eine Umladeeinrichtung, insbesondere geeignet zum Umsetzen von nicht selbst verfahrbaren Containern zwischen Fahrzeugen und Lagerstationen.

Das Umsetzen von Containern oder anderen Transport- oder Wechselbehältern, insbesondere kubischen Containern erfolgt im einfachsten Fall mittels einer Hub- und Verfahreinrichtung, die mit Klemmbalken oder dergleichen versehen ist, z. B. von oder zu Verladeterminals auf Schiffe oder Landfahrzeuge.

Bekannt sind auch Umsetzeinrichtungen, bei denen derartige Container zwischen nahe zueinander stehenden Wagons oder Fahrzeugen umsetzbar sind. So beschreibt die EP-A-0622288 eine dem Oberbegriff des Anspruchs 1 entsprechende Einrichtung zum Umsetzen von Wechselbehältern quer zur Längsachse des Wechselbehälters. Hierzu wird eine Umsetzvorrichtung mit einer zugeordneten Hubvorrichtung unter den Wechselbehälter geführt und der Wechselbehälter wird nachfolgend senkrecht zur Verschieberichtung angehoben und in Verschieberichtung in eine Endbetriebslage überführt. Die Umsetzvorrichtung weist hierzu ein teleskopierbares Teil auf, das unter den Wechselbehälter geschoben wird. Ist die Endbetriebslage erreicht, wird der Wechselbehälter wieder abgesenkt, wobei die Umsetzvorrichtung in ihre Ruhelage zurückkehrt. Die Umsetzvorrichtung ist z. B. auf einem LKW angeordnet. Die Umsetzbewegung ist aufgrund von Positioniervorgängen diskontinuierlich.

Die EP-B-1344733 offenbart eine Umsetzvorrichtung, die eine kontinuierliche Umsetzbewegung und optimale Kraftverteilung aufweisen soll. Hierzu sind mehrere, quer zur Verschieberichtung nebeneinander angeordnete Füsse vorgesehen, die abwechselnd belastbar sind. Unbelastet sind die Füsse mittels zugehöriger Vorschubzylinder in der Verschieberichtung gegenüber dem Boden verschiebbar. Über diesen Füssen ist ein Tragkopf angeordnet, der auf dem jeweils belasteten Fuss aufliegt.

Bei einer Umschlagvorrichtung gemäss EP-B-0636080 soll ein Wechselbehälter mittels Hubeinrichtung mit oder ohne einen Tragrahmen von seiner Unterlage, z. B. der Ladefläche eines Fahrzeugs abhebbar sein. Der Tragrahmen soll in seiner Länge verstellbar sein.

Bei einem Umladesystem gemäss WO-A-2006119955 wird eine Verladehilfseinrichtung im Bereiche der zu verladenden Ladeeinheit positioniert, wobei die Lastaufnahmefläche über ein Erkennungsmittel erfasst und eine formschlüssige Verbindung zwischen der Lastaufnahmefläche der Ladeeinheit und einer Hubeinrichtung hergestellt wird. Die Hubeinrichtung hebt nachfolgend die Ladeeinheit an und ein Ausleger einer Verschiebeeinheit wird unter die Ladeeinheit gefahren. Danach wird die Ladeeinheit auf den Ausleger abgesenkt und mittels Verschiebeeinheit und über diese in die neue Position verfahren. Nach erreichen derselben wird der Ausleger in seine Bereitschaftsstellung eingefahren.

Eine weitere Verschubeinrichtung (DE-U-202007003581) soll für Container unterschiedlicher Grösse geeignet sein und weist einen Gleitschuh auf, der auf seiner Unterseite zum Abstützen ausgebildet ist und auf seiner Oberseite mit einer ebenen Laufbahn und einer weiteren, höhenversetzten Laufbahn versehen ist. Der Gleitschuh ist von einer Haube überdeckt, die an ihren Enden je einen Rollenbock aufweist, dessen Rollen zwischen den Laufbahnen verschiebbar an der Haube festgelegt sind. Vorgesehen ist weiterhin ein Hubzylinder, dessen eines Ende an der Haube und dessen anderes Ende am Gleitschuh angreift.

Der Erfindung liegt die Aufgabe zugrunde, eine Umladeeinrichtung zu entwickeln, die insbesondere zum Umsetzen von nicht selbst verfahrbaren Containern zwischen Fahrzeugen und Lagerstationen geeignet ist und die einfach im Aufbau und kostengünstig, mobil und variabel einsetzbar ist.

Die Aufgabe ist mit den Merkmalen des Patentanspruchs 1 gelöst.

Vorgesehen ist eine verfahrbare Wippe als zentraler Bestandteil einer Verfahreinheit zur Umsetzung eines Containers oder dergleichen Wechselbehälter.

Bevorzugte Ausgestaltungsformen der Erfindung sind in den abhängigen Ansprüchen offenbart.

Es sind bevorzugt zwei Umladeeinrichtungen vorgesehen, die spiegelbildlich symmetrisch je Ende eines Containers (unterer Eckbeschlag) oder dergleichen Wechselbehälter (Cornerfittings) anzuordnen sind.

Unterhalb der Wippe ist eine Rollbahn vorgesehen, auf der die Wippe verfahrbar ist. Die Verfahrrichtung kann dabei quer oder auch längs (bei einzelnen Containern) zur Hauptachse eines Fahrzeuges oder Wagons sein.

Bei Bedarf können auch zwei oder mehrere Verfahreinheiten vorgesehen sein.

Wippe und Rollbahn der Verfahreinheit sind einer hubfähigen und verfahrbaren Hub- und Greifeinrichtung zugeordnet, die bevorzugt klappbar ist. Die genannten Bestandteile der Umladeeinrichtung können auf einem Fahrzeug oder Wagon angeordnet sein oder auch als separate Vorrichtung vorgesehen sein.

Der Kraftfluss wird über das Trägermodul der Umladeeinrichtung in den Containertragwagen geleitet und nicht direkt in bzw. über das Fahrzeug oder die Lagerstation wie beim Stand der Technik. Dies ermöglicht eine wesentliche konstruktive Vereinfachung.

Eine weitere Teilaufgabe besteht in der Bereitstellung eines Verfahrens zum Umsetzen von nicht selbst verfahrbaren Containern zwischen Fahrzeugen und Lagerstationen, welches einfach und zuverlässig ausführbar ist. Diese Aufgabe wird durch das Verfahren gemäß Anspruch 10 gelöst.

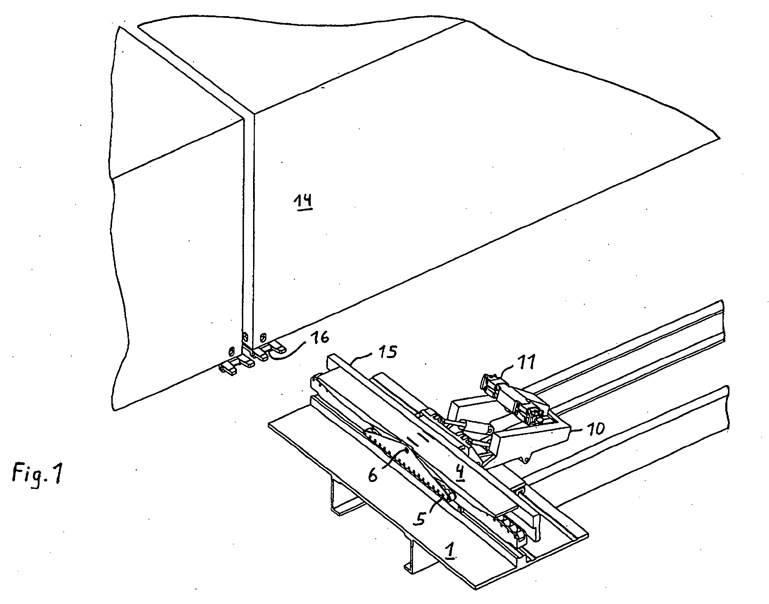

Die Erfindung wird nachfolgend in einem Ausführungsbeispiel anhand einer Zeichnung näher beschrieben. In der Zeichnung zeigen die
- Fig. 1:: eine erfindungsgemässe Umladeeinrichtung

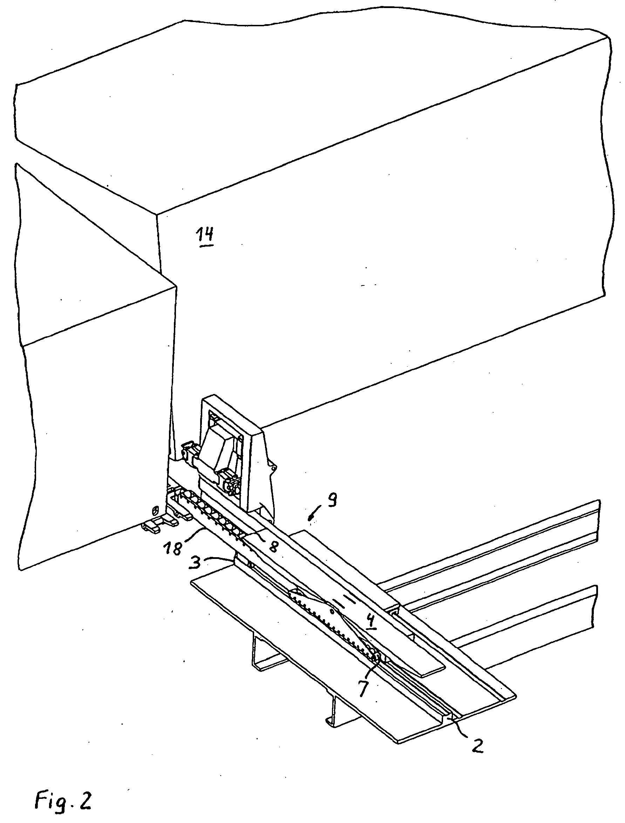

- Fig. 2:: einen angehobenen Container

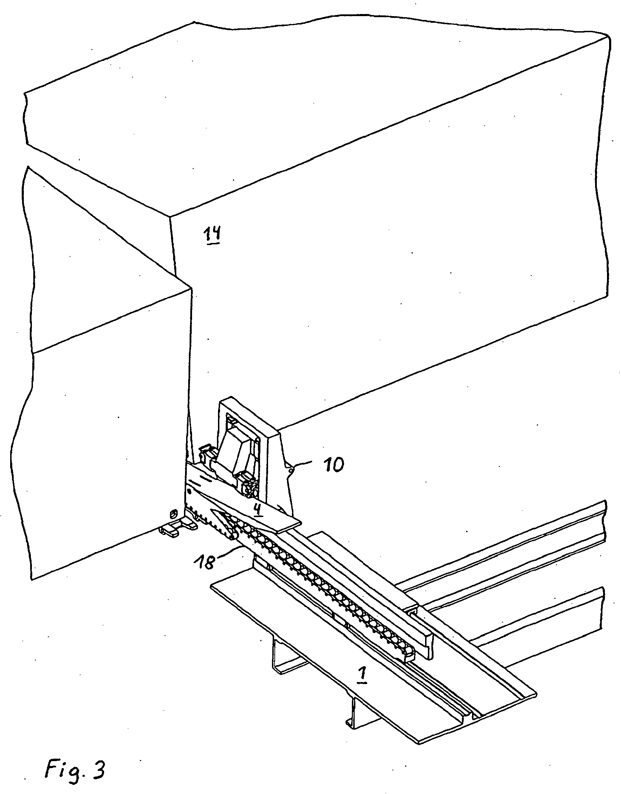

- Fig. 3:: eine zugeführte Wippe der Umladeeinrichtung

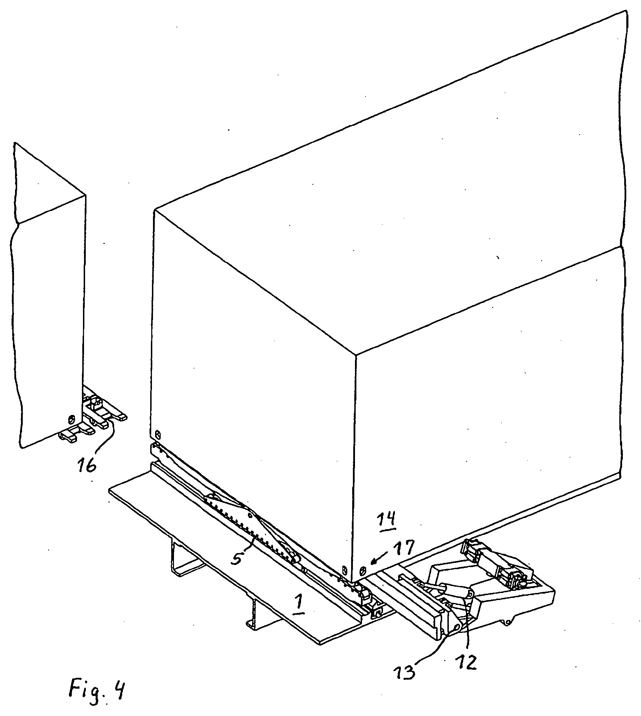

- Fig. 4: den auf ein Trägermodul überführten Container
- Fig. 5:: eine weitere Ausführungsform der Umladeeinrichtung
- Fig. 6:: eine Hubeinrichtung der Umladeeinrichtung nach (Fig. 6a und b).

Ein, auf einem Trägermodul 1 (z. B. auf einer Ladefläche eines LKW oder eines Wagons) angeordneter Rollenbalken 18 mit einer Rollbahn 2 ist in einem Rahmen 3 dies Trägermoduls 1 (quer zur Längsachse von Containern 14) längs verfahrbare geführt.

Auf der Rollbahn 2 ist eine, auf Rollen 7 verfahrbare Wippe 4 angeordnet. Die Wippe 4 ist an den Teilen eines Fahrwerks 5 in Lagern 6 schwenkbar aufgenommen. Die Teile des Fahrwerks 5 sind in Form flacher gleichschenkliger Dreiecke ausgebildet. Die Rollen 7 sind an den (langen) Hypotenusen zwischen zwei Teilen angeordnet und bilden das gesamte Fahrwerk 5.

Zwischen diesen Komponenten ist die Wippe 4 im Lager 6 nach beiden Seiten schwenkbar angeordnet.

Möglich sind aber auch andere Bauformen.

Das Mass der Auslenkung der Wippe 4 wird durch Auflage einer Kante 8 der Wippenfläche auf der Rollbahn 2 begrenzt. Die Schwenkbewegung wird mittels eines links und rechts vom Lager 6 angeordneten Hubzylinders 12 einer Hubeinrichtung 10 ausgeführt, die seitlich am Trägermodul 1 verfahrbar vorgesehen ist. Diese Hubeinrichtung 10 dient dem Anheben und Senken des Containers 14. Die Hubeinrichtung 10 umfasst übliche Greif- und Spannelemente 11 (Twistlock) sowie Hubzylinder 12. Die Hubeinrichtung 10 ist entlang der Wippe 4 und mit einer Fahrschiene 15 der Verfahreinheit 9 verfahrbar. Die Hubeinrichtung 10 ist bei Nichtgebrauch abklappbar (Schwenklager 13).

Die Hubeinrichtung 10 kann auch unterhalb der Ebene des Tragwagens 1 abgeklappt verfahren werden.

Zur Umsetzung eines Containers 14 auf einen LW wird dieser zunächst auf der Ladefläche eines Bahnwagens aus seiner Verankerung gelöst und einseitig an einem Anschlagpunkt 17 angehoben. Das Anheben erfolgt mittels der ausgefahrenen und angestellten Hubeineinrichtung 10 und des Greif- und Spannelements 11. Anschliessend fährt der Rollenbalken 18 mit der Rollbahn 2 in Richtung der Anhebung unter den Container 14 in eine Aussparung 16 der Containerverankerung und die Wippe 4 fährt nachfolgend auf der Rollbahn 2 unter den angehobenen Container 14, wobei die vordere Kante 8 der Wippe 4 in Richtung Rollbahn 2 (resp. Verfahrrichtung) gesenkt ist. Sobald sich die Wippe 4 weitgehend unter dem Container 14 befindet, wird diese mittels der Hubeinrichtung 10 wieder in eine waagerechte Position gebracht und der Container 14 wird, waagerecht auf der Wippe 4 gelagert zum resp. über das Trägermodul 1 verfahren, wobei Rollbahn 2 und Wippe 4 wieder in ihre Ausgangsstellung verfahren werden. Dort angekommen wird der Container 14 für den weiteren Transport wieder in Anschlagpunkten verankert. Somit ist nur eine Hubeinrichtung 10 erforderlich. Die Hubeinrichtung 10 klappt nach unten ab. Obgleich in der Zeichnung nur eine Umladeeinrichtung dargestellt ist, sind zum Umladen des Containers 14 zwei Umladeeinrichtungen vorgesehen, die spiegelbildlich symmetrisch je Ende des Containers 14 anzuordnen sind.

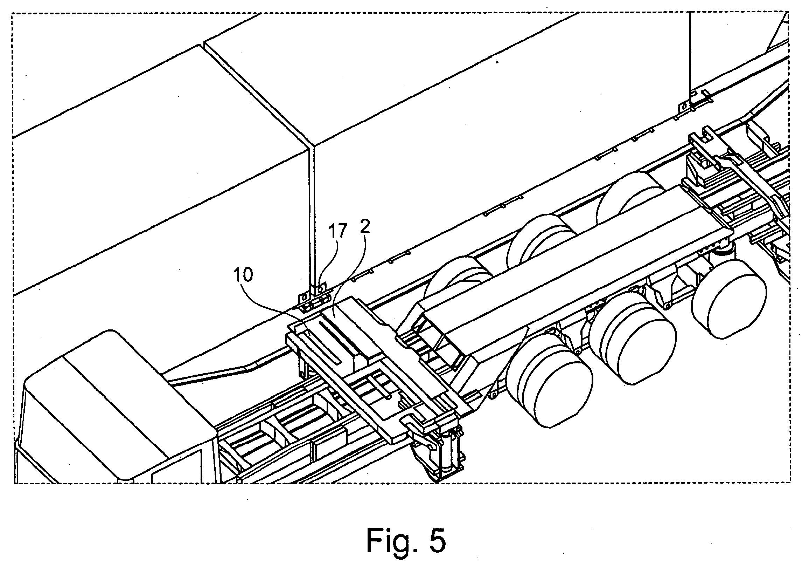

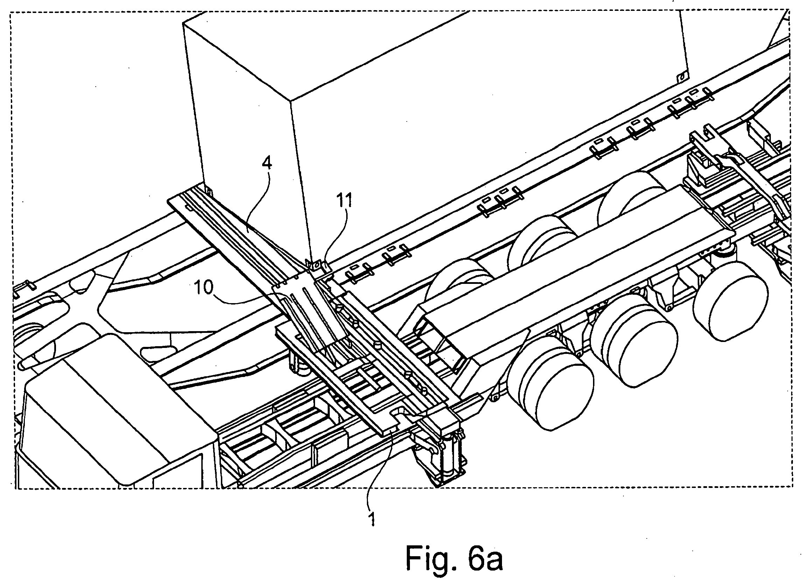

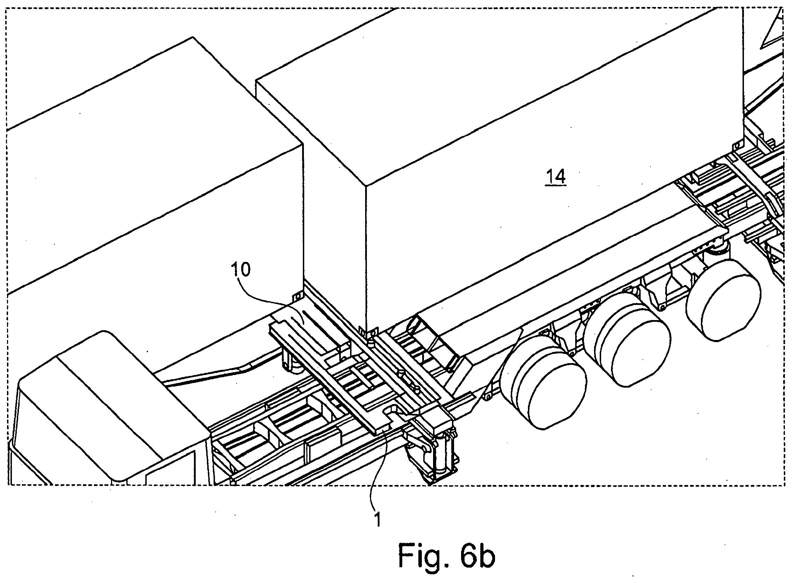

In einer weiteren Ausführungsform ist die Hubeinrichtung 10 im Trägermodul 1 der Umladeeinrichtung parallel zur Verfahreinheit 9 resp. zur Wippe 4 um einen virtuellen Drehpunkt hubfähig angeordnet (Fig. 5 und 6).

In Ruhestellung ist die Hubeinrichtung platzsparend im Trägermodul 1 versenkt angeordnet. Für einen Umsetzvorgang wird die Hubeinrichtung 10 in Richtung Container 14 angehoben und vorgeschoben, so dass das Greif- und Spannelement 11 im Anschlagpunkt 17 des Containers 14 einrasten kann und der Container 14 mittels der Hubeinrichtung 10 angehoben werden kann. Für das Anheben und Verschieben der Hubeinrichtung 10 ist jeweils ein Zylinder im Trägermodul 1 vorgesehen, so dass eine Kreisbahn fahrbar ist.

Nachfolgend fährt der Rollenbalken 18 wie vorbeschrieben unter den Container 14. Sobald sich der Container 14 auf der Rollbahn 2 befindet, fährt die Hubeinrichtung 10 zurück, der Anschlagpunkt 17 wird freigegeben und die Hubeinrichtung 10 wird in Ruheposition verfahren.

Mittels beider Ausführungsformen ist auch ein analoges Umsetzen des Containers 14 vom LKW auf einen Bahnwagen möglich.

## Patentansprüche

1. Umladeeinrichtung zum Umsetzen von nicht selbst verfahrbaren Containern oder dergleichen Wechselbehältern zwischen Fahrzeugen und Wagons oder Lagerstationen, mit einer Hubeinrichtung (10) und einer Verfahreinheit (9), **dadurch gekennzeichnet,**
- **dass** die Hubeinrichtung (10) zum einseitig schrägen Anheben des Containers (14) ausgebildet ist,
- **dass** die Verfahreinheit (9) eine verfahrbare Wippe (4) umfasst,
- welche in Lagern (6) eines Fahrwerks (5) schwenkbar aufgenommen ist,
- und **dass** dem Fahrwerk (5) eine Rollbahn (2) zugeordnet ist, auf der die Wippe unter den schräg angehobenen Container (14) verfahrbar ist.

2. Umladeeinrichtung nach Anspruch 1, **dadurch gekennzeichnet, dass** die Wippe (4) mit dem Container (14) mittels der Hubeinrichtung (10) wieder in eine waagrechte Position bringbar und die Verfahreinheit (9) wieder in eine Ausgangsposition rückführbar ist.

3. Umladeeinrichtung nach einem der Ansprüche 1 oder 2, **dadurch gekennzeichnet, dass** die Rollbahn (2) auf einem verfahrbaren Rollenbalken (18) angeordnet ist.

4. Umladeeinrichtung nach einem der Ansprüche 1 bis 3, **dadurch gekennzeichnet, dass** das Fahrwerk (5) aus Teilen in Form flacher gleichschenkliger Dreiecke ausgebildet ist, wobei an den Hypotenusen Rollen (7) angeordnet sind.

5. Umladeeinrichtung nach Anspruch 4, **dadurch gekennzeichnet, dass** die Rollen (7) und die Wippe (4) zwischen zwei Teilen eine Komponente bildend angeordnet sind.

6. Umladeeinrichtung nach Anspruch 4, **dadurch gekennzeichnet, dass** die Rollen (7) zwischen zwei Teilen eine Komponente bildend angeordnet sind und dass die Wippe (4) wiederum zwischen zwei Komponenten des Fahrwerks (5) angeordnet ist.

7. Umladeeinrichtung nach einem der Ansprüche 1 bis 6, **dadurch gekennzeichnet, dass** der Verfahreinheit (9) eine abklappbare und/oder verfahrbare Hubeinrichtung (10) zugeordnet ist.

8. Umladeeinrichtung nach Anspruch 7, **dadurch gekennzeichnet, dass** die Hubeinrichtung (10) im Trägermodul (1) der Umladeeinrichtung parallel zur Verfahreinheit (9) um einen virtuellen Drehpunkt hubfähig angeordnet ist.

9. Umladeeinrichtung nach einem der Ansprüche 1 bis 8, **dadurch gekennzeichnet, dass** zwei Umladeeinrichtungen vorgesehen sind, die spiegelbildlich symmetrisch je Ende in Längsrichtung des Containers (14) angeordnet sind.

10. Verfahren zum Umsetzen von nicht selbst verfahrbaren Containern oder dergleichen Wechselbehältern zwischen Fahrzeugen und Wagons oder Lagerstationen mittels einer Hubeinrichtung (10) und einer Verfahreinheit (9), **gekennzeichnet durch** die Verfahrensschritte
a) Entriegelung und einseitiges, schräges Anheben des Containers (14) auf der Ladefläche
b) Verfahren einer Verfahreinheit (9) mit einem Rollenbalken (18) unter den schräg gestellten Container (14) unter den Container (14),
c) Verfahren einer Wippe (4) auf einer Rollbahn (2) des Rollenbalkens (18) unter den Container (14), wobei die Wippe (4) auf der Höhe eines Anschlagpunktes oder Zapfens in Verfahrrichtung schräg abgeklappt wird,
d) Rückstellung der Wippe (4) und des Containers (14) in eine waagerechte Position, sobald die Wippe (4) in ausreichender Weise unter dem Ende des Containers (14) positioniert ist,
e) Rückführung der Verfahreinheit (9) und des Containers (14) in die Ausgangsposition der Verfahreinheit (9) und Verankerung des Containers (14).

## Claims

1. Reloading device for transferring containers that cannot move under their own power or suchlike swap bodies between vehicles and wagons or storage stations, with a lifting device (10) and a moving unit (9),
**characterized in that**
- the lifting device (10) is constructed for the one-sided inclined lifting of the container (14),
- the moving unit (9) comprises a movable rocker (4),
- which is in bearings of a moving device (5) pivotable fixed,
- and to the moving device (5) a runway (2) is assigned and on the runway (2) the rocker (4) is movable under the inclined lifted container (14).

2. Reloading device according to claim 1,
**characterized in that**
the rocker (4) with the container (14) is movable in a horizontal position by means of the lifting device (10) and the moving unit (9) is once again movable back to the starting position.

3. Reloading device according to one of the claims 1 or 2, **characterized in that**
the runway (2) is arranged on a movable roller girder (18).

4. Reloading device according to one of the claims 1 to 3,
**characterized in that**
the moving device (5) is constructed of parts in the form of flat isosceles triangles, whereby at the hypotenuses the rollers (7) are arranged.

5. Reloading device according to claim 4,
**characterized in that**
the rollers (7) and the rocker (4) are arranged between two parts forming a component.

6. Reloading device according to claim 4,
**characterized in that**
the rollers (7) are arranged between two parts forming a component and that the rocker (4) between two components of the moving device (5) is arranged.

7. Reloading device according to one of the claims 1 to 6,
**characterized in that**
to the moving unit (9) a hinged and/or movable lifting device (10) is assigned.

8. Reloading device according to claim 7,
**characterized in that**
the lifting device (10) in the carrier module (1) of the reloading device is able to be lifted around a virtual pivot point parallel to the moving unit (9).

9. Reloading device according to one of the claims 1 to 8,
**characterized in that**
two reloading devices are existing, which are arranged mirror-inverted symmetric per end in the longitudinal direction of the container (14).

10. Method for transferring containers that cannot move under their own power or suchlike swap bodies between vehicles and wagons or storage stations by means of a lifting device (10) and a moving unit (9),
**characterized by** the process steps
a) unlocking and one-sided inclined lifting of the container (14) on the loading area,
b) moving of a moving unit (9) with a roller girder (18) under the inclined positioned container (14) under the container (14),
c) moving of a rocket (4) on a runway (2) of the roller girder (18) under the container (14), whereby the rocket (4) is in the moving direction slopingly hinged at the height of an attachment point or of a pin,
d) moving the rocket (4) and the container (14) back in a horizontal position as soon as the rocket (4) is in a sufficient manner under the end of the container (14) positioned,
e) moving the rocket (4) and the container (14) back in the starting position of the moving unit (9) and fastening of the container (14).

## Revendications

1. Dispositif de transbordement pour transporter des conteneurs ne pouvant pas être déplacés d'eux-mêmes ou des caisses mobiles similaires entre des véhicules et des wagons ou des postes de stockage, comprenant un dispositif de levage (10) et une unité de transport (9), **caractérisé en ce que**
- le dispositif de levage (10) est réalisé pour soulever le conteneur (14) obliquement d'un côté,
- l'unité de transport (9) comprend une bascule déplaçable (4),
- laquelle est reçue de manière à pouvoir pivoter dans des supports (6) d'un mécanisme de roulement (5),
- et **en ce que** le mécanisme de roulement (5) est associé à une voie de roulement (2) sur laquelle la bascule peut être déplacée sous le conteneur (14) soulevé obliquement.

2. Dispositif de transbordement selon la revendication 1, **caractérisé en ce que** la bascule (4) peut être ramenée dans une position horizontale avec le conteneur (14) au moyen du dispositif de levage (10) et l'unité de transport (9) peut être ramenée dans une position de départ.

3. Dispositif de transbordement selon l'une quelconque des revendications 1 ou 2, **caractérisé en ce que** la voie de roulement (2) est disposée sur une poutre à rouleaux déplaçable (18).

4. Dispositif de transbordement selon l'une quelconque des revendications 1 à 3, **caractérisé en ce que** le mécanisme de roulement (5) est réalisé à partir de pièces en forme de triangles plats isocèles, des rouleaux (7) étant disposés au niveau des hypoténuses.

5. Dispositif de transbordement selon la revendication 4, **caractérisé en ce que** les rouleaux (7) et la bascule (4) sont disposés entre deux pièces en formant un composant.

6. dispositif de transbordement selon la revendication 4, **caractérisé en ce que** les rouleaux (7) sont disposés entre deux pièces en formant un composant et **en ce que** la bascule (4) est à son tour disposée entre deux composants du mécanisme de roulement (5).

7. Dispositif de transbordement selon l'une quelconque des revendications 1 à 6, **caractérisé en ce qu'**à l'unité de transport (9) est associé un dispositif de levage rabattable et/ou déplaçable (10).

8. Dispositif de transbordement selon la revendication 7, **caractérisé en ce que** le dispositif de levage (10) est disposé dans le module de support (1) du dispositif de transbordement parallèlement à l'unité de transport (9) de manière à pouvoir être soulevé autour d'un centre virtuel.

9. Dispositif de transbordement selon l'une quelconque des revendications 1 à 8, **caractérisé en ce que** deux dispositifs de transbordement sont prévus, lesquels sont disposés symétriquement avec une symétrie spéculaire pour chaque extrémité dans la direction longitudinale du conteneurs (14).

10. Procédé de transbordement de conteneurs ne pouvant pas être déplacés d'eux-mêmes ou de caisses mobiles similaires entre des véhicules et des wagons ou des postes de stockage au moyen d'un dispositif de levage (10) et d'une unité de transport (9), **caractérisé par** les étapes de procédé suivantes :
a) déverrouillage et soulèvement obliqué d'un côté du conteneur (14) sur la surface de chargement,
b) déplacement sous le conteneur (14) d'une unité de transport (9) avec une poutre à rouleaux (18) sous le conteneur placé obliquement (14),
c) déplacement d'une bascule (4) sur une voie de roulement (2) de la poutre à rouleaux (18) sous le conteneur (14), la bascule (4) étant rabattue obliquement à la hauteur d'un point de butée ou d'un tourillon dans la direction de déplacement,
d) repositionnement de la bascule (4) et du conteneur (14) dans une position horizontale dès que la bascule (4) est positionnée de manière suffisante sous l'extrémité du conteneur (14),
e) retour de l'unité de transport (9) et du conteneur (14) dans la position de départ de l'unité de transport (9) et ancrage du conteneur (14).
